(19) Europäisches Patentamt / European Patent Office / Office européen des brevets

(11) **EP 4 279 388 A1**

(12) **DEMANDE DE BREVET EUROPEEN**

(43) Date de publication:
**22.11.2023 Bulletin 2023/47**

(21) Numéro de dépôt: **23172638.1**

(22) Date de dépôt: **10.05.2023**

(51) Classification Internationale des Brevets (IPC):
**B64D 15/16** $^{(2006.01)}$

(52) Classification Coopérative des Brevets (CPC):
**B64D 15/163**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **16.05.2022 FR 2204625**

(71) Demandeurs:
- **Airbus Operations SAS**
  **31060 Toulouse (FR)**
- **Institut National des Sciences Appliquées de Toulouse**
  **31077 Toulouse Cedex 4 (FR)**
- **Centre National de la Recherche Scientifique (CNRS)**
  **75016 Paris (FR)**
- **Université Toulouse III - Paul Sabatier (UT3)**
  **31062 Toulouse Cedex 9 (FR)**
- **Institut Superieur De L'aeronautique Et De L'espace - École Nationale Superieure De Mecanique Et D'aerotechnique (ISAEE-NSMA)**
  **86361 Futuroscope-chasseneuil-du-poitou (FR)**
- **École nationale supérieure des Mines d'Albi-Carmaux (IMT Mines ALBI)**
  **81013 Albi CT Cedex 9 (FR)**

(72) Inventeurs:
- **BOURHIS, Arnaud**
  **31060 TOULOUSE (FR)**
- **RAFIK, Younes**
  **31400 TOULOUSE (FR)**
- **PALANQUE, Valerian**
  **31400 TOULOUSE (FR)**
- **POMMIER BUDINGER, Valérie**
  **31400 TOULOUSE (FR)**
- **BUDINGER, Marc**
  **31400 TOULOUSE (FR)**
- **SAUDEL, Brice**
  **31060 TOULOUSE (FR)**
- **CLERGENT, Yves**
  **31060 TOULOUSE (FR)**
- **OLIVIER, Philippe**
  **31077 TOULOUSE (FR)**

(74) Mandataire: **Gevers & Orès**
**Immeuble le Palatin 2**
**3 Cours du Triangle**
**CS 80165**
**92939 Paris La Défense Cedex (FR)**

(54) **ÉLÉMENT DÉGIVRANT SUSCEPTIBLE D'ÊTRE EXPOSÉ À DU GIVRE**

(57) - Élément dégivrant susceptible d'être exposé à du givre.
- L'élément dégivrant (1) comporte une peau (2) pourvue d'une surface à dégivrer (3), il comprend également au moins un actionneur d'excitation (5) fixé sur la peau (2), l'actionneur d'excitation (5) étant configuré pour exciter la peau (2) selon au moins un mode de vibration prédéterminé générant une déformation de la peau (2), la déformation de la peau (2) comportant au moins un ventre et un noeud, la peau (2) présentant une épaisseur caractéristique (E) généralement constante avec, localement, au moins une variation d'épaisseur (9) qui est localisée en fonction du ou des modes de vibration prédéterminés.

Fig. 1

EP 4 279 388 A1

Processed by Luminess, 75001 PARIS (FR)

# Description

## Domaine technique

La présente invention concerne un élément dégivrant susceptible d'être exposé à du givre.

## État de la technique

Certaines surfaces d'élément d'aéronefs, en particulier les bords d'attaque comme une entrée d'air d'une nacelle de moteur, sont susceptibles d'être exposées à du givre et peuvent donc subir la formation du givre qui s'accumule pour former des blocs de glace. Ces blocs de glace peuvent perturber le bon fonctionnement des aéronefs et il est donc souhaitable de les éliminer.

Il existe différents systèmes permettant de se débarrasser de tels blocs de glace. Une solution consiste à chauffer le bord d'attaque à dégivrer pour empêcher ou supprimer l'accumulation de givre. Par exemple, il peut être chauffé par un dispositif électrothermique ou par une circulation d'air chaud provenant des moteurs dans un espace situé derrière le bord d'attaque. Une autre solution consiste à installer un tablier auto-dégivreur (« de-icing boot » en anglais) sur la surface à dégivrer. Ce tablier comporte une membrane qui est gonflée avec de l'air sous pression afin de briser les blocs de glace. Une autre solution encore consiste à protéger une surface avec une couche bouclier sur laquelle un actionneur électromagnétique à fort courant électrique applique des chocs afin de décoller la glace.

Toutefois, ces solutions usuelles ne sont pas complètement satisfaisantes. En effet, elles peuvent exiger des puissances importantes, induire des températures incompatibles avec l'utilisation de certains matériaux, nécessiter des alimentations encombrantes, présenter une durée de vie insuffisante, requérir une maintenance importante ou dégrader l'aérodynamique de l'aéronef.

## Exposé de l'invention

La présente invention concerne un élément dégivrant comportant une peau pourvue d'une surface à dégivrer.

Selon l'invention, l'élément dégivrant comprend au moins un actionneur d'excitation fixé sur la peau, l'actionneur d'excitation étant configuré pour exciter la peau selon au moins un mode de vibration prédéterminé générant une déformation de la peau, la déformation de la peau comportant au moins un ventre et un noeud, la peau présentant une épaisseur caractéristique généralement constante avec, localement, au moins une variation d'épaisseur qui est localisée en fonction du ou des modes de vibration prédéterminés.

Ainsi, grâce à l'invention, on dispose d'une peau dont les variations d'épaisseur permettent d'uniformiser les déformations de la glace présente sur la peau lorsque ladite peau est excitée par l'actionneur d'excitation. Cette uniformisation de la courbure de la peau évite, dans une zone réduite, une localisation des contraintes dans la glace et induit un élargissement de la zone de contraintes mécaniques. On bénéficie ainsi d'une augmentation de l'énergie élastique stockée utile permettant de dégivrer la surface à dégivrer. Cette disposition uniformise et augmente également le taux de restitution d'énergie au niveau de la surface à dégivrer. Ces variations d'épaisseur de la peau ont pour effet d'améliorer la répartition et le transfert d'énergie de la peau vers la glace se trouvant sur la surface à dégivrer et donc d'améliorer le dégivrage.

Avantageusement, le ou les modes de vibration prédéterminés correspondent à des modes de résonance de la peau.

De préférence, la ou les variations d'épaisseur de la peau sont localisées au niveau du ou des ventres du ou des modes de vibration prédéterminés.

Dans un premier mode de réalisation, les variations d'épaisseur de la peau correspondent à des augmentations d'épaisseur locales de ladite peau par rapport à l'épaisseur caractéristique.

Dans une réalisation particulière de ce mode de réalisation, la peau comporte :

- une couche principale d'épaisseur égale à l'épaisseur caractéristique ; et
- une ou plusieurs pièces rapportées fixées sur la couche principale, la ou les pièces rapportées correspondant à la ou aux augmentations d'épaisseur de la peau.

Dans une autre réalisation particulière, la ou les augmentations d'épaisseur de la peau présentent une forme de bosse comprenant chacune une partie centrale, où l'épaisseur de la peau est maximale, et une partie périphérique entourant la partie centrale, la partie centrale présentant une rigidité supérieure à une rigidité de la partie périphérique.

Dans un deuxième mode de réalisation, la ou les variations d'épaisseur correspondent à des diminutions d'épaisseur locales de ladite peau par rapport à l'épaisseur caractéristique, lesdites diminutions d'épaisseur comprenant chacune un fond où l'épaisseur de la peau est minimale.

Dans une variante de réalisation, l'actionneur d'excitation est configuré pour exciter successivement la peau selon au moins deux modes de vibration prédéterminés, lesdits modes de vibration prédéterminés étant complémentaires en termes de déformées et contraintes.

Dans une autre variante de réalisation, l'élément dégivrant comporte au moins une bande thermique agencée sur la peau au niveau d'au moins un noeud du ou des modes de vibration prédéterminés, ladite bande thermique étant configurée pour générer une chaleur apte à dégivrer la surface à dégivrer de la peau au moins au niveau du ou des noeuds sur lesquels elle est fixée.

Par ailleurs, de préférence, l'actionneur d'excitation correspond à un actionneur électromagnétique ou à un actionneur piézoélectrique.

En outre, avantageusement, l'actionneur d'excitation est configuré pour exciter la peau par vibrations, par chocs ou par impulsions de force.

**Brève description des figures**

Les figures annexées feront bien comprendre comment l'invention peut être réalisée. Sur ces figures, des références identiques désignent des éléments semblables.

La figure 1 est une vue schématique d'une section transversale d'une peau en forme de lame rectangulaire présentant des surépaisseurs.

La figure 2 est une vue schématique vers la surface à dégivrer en perspective de la peau de la figure 1 excitée selon un mode de vibration particulier.

La figure 3 est une vue schématique d'une section transversale d'une peau en forme de lame rectangulaire présentant des cavités.

La figure 4 est une vue schématique d'une section transversale d'une peau en forme de lame rectangulaire présentant des cavités et pourvue d'une membrane.

La figure 5 est une vue schématique vers la surface à dégivrer en perspective d'une peau en forme de plaque présentant des surépaisseurs.

La figure 6 est une vue vers la surface opposée à la surface à dégivrer en perspective de la peau de la figure 5.

La figure 7 est une vue schématique d'une section transversale d'une surépaisseur particulière et une vue vers la surface opposée à la surface à dégivrer de ladite surépaisseur.

La figure 8 est une vue schématique d'une section transversale d'une autre surépaisseur particulière et une vue vers la surface opposée à la surface à dégivrer de ladite surépaisseur.

La figure 9 une vue en coupe longitudinale, schématique et partielle, d'une entrée d'air d'une nacelle de moteur d'aéronef comportant un élément dégivrant selon un mode de réalisation particulier.

La figure 10 est une vue partielle en perspective de l'élément dégivrant équipant l'entrée d'air de la nacelle de moteur de la figure 9.

La figure 11 est une vue vers la surface à dégivrer d'une peau excitée selon un premier mode de vibration, complémentaire à un second mode de vibration (figure 12).

La figure 12 est une vue vers la surface à dégivrer d'une peau excitée selon le second mode de réalisation, complémentaire au premier mode de vibration (figure 11).

La figure 13 est une vue vers la surface à dégivrer d'une peau excitée selon un mode de vibration particulier et comportant des bandes thermiques.

La figure 14 une vue vers la surface à dégivrer d'une peau excitée selon un mode de vibration particulier et comportant des bandes d'élasticité différente du reste de la peau.

La figure 15 est une vue en perspective d'un aéronef comportant un élément dégivrant correspondant à une lèvre d'entrée d'air d'une nacelle de moteur.

**Description détaillée**

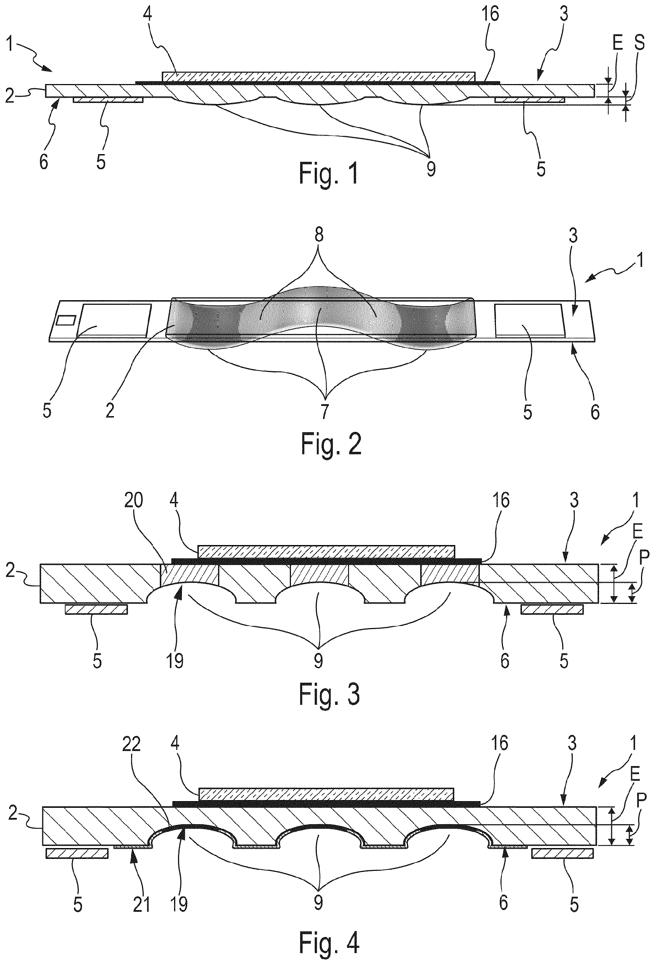

L'élément dégivrant 1, représenté dans des modes de réalisation particuliers de la figure 1 à la figure 15, est un élément qui peut être monté sur des dispositifs ou des systèmes très variés. L'élément dégivrant 1 est sujet à la formation (ou dépôt) de glace, au moins sur une partie. Par « glace » on entend du givre ou des blocs de glace pouvant notamment se présenter sous la forme de plusieurs couches superposées.

L'élément dégivrant 1 est particulier en ce qu'il comporte une peau configurée pour éliminer cette glace tel que décrit dans la suite de la description.

L'élément dégivrant 1 peut être utilisé dans des domaines variés, en particulier sur des dispositifs ou des systèmes comportant des éléments de pale. Par exemple, l'élément dégivrant 1 peut correspondre à un élément de pale d'une hélice d'avion ou de navire ou à un élément de pale d'un rotor d'éolienne ou d'hélicoptère.

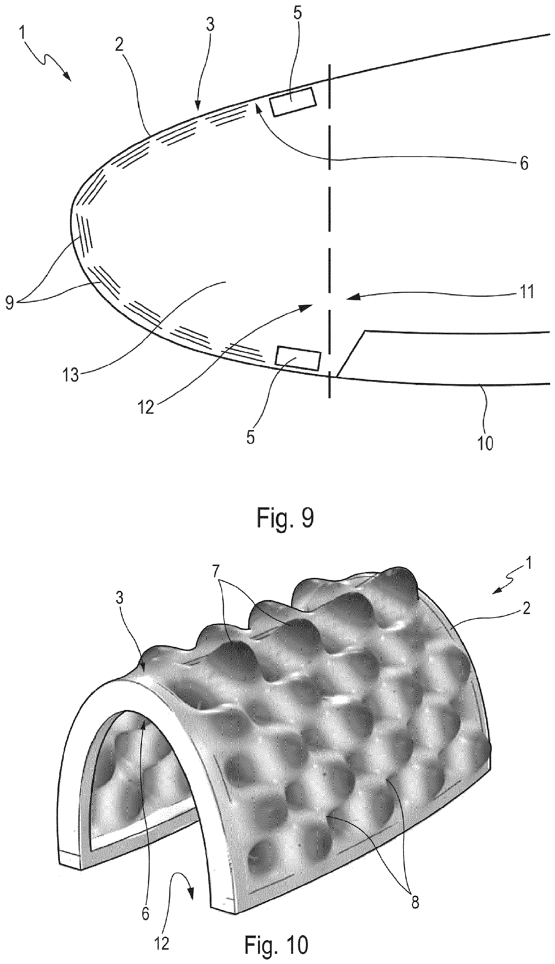

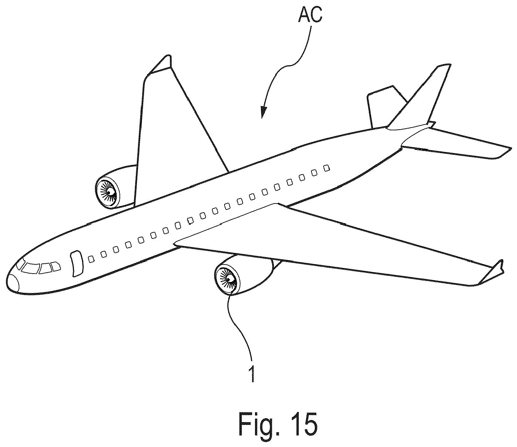

De manière non limitative, l'élément dégivrant 1 est particulièrement adapté au dégivrage de certaines parties d'un aéronef AC (figure 15), par exemple un avion de transport. Il peut correspondre à toute pièce de l'aéronef AC présentant au moins une surface à dégivrer comme une surface exposée à l'extérieur de l'aéronef AC et qui est sujet à la formation de glace. Par exemple, il peut s'agir d'un bord d'attaque de l'aéronef AC tel qu'un bord d'attaque d'une aile ou une lèvre d'entrée d'air d'une nacelle de moteur, comme représenté sur la figure 9, la figure 10 et la figure 15. Il peut également s'agir d'autres éléments usuels de l'aéronef AC, par exemple une gouverne telle qu'un aileron.

L'invention est particulièrement adaptée à des éléments comportant des surfaces lisses à dégivrer. Une surface lisse correspond à une surface sans formes ou éléments faisant saillie. Toutefois, il peut également s'agir d'éléments comportant tout type de surface apte à être excitée mécaniquement comme détaillé ci-après. L'élément dégivrant 1 comporte une peau 2 présentant une épaisseur caractéristique E généralement constante. La peau 2 est pourvue d'une surface à dégivrer 3 (figure 1 à figure 10). La surface à dégivrer 3 correspond à une surface de l'élément dégivrant 1 sur laquelle de la glace peut s'accumuler sous la forme d'au moins une couche de glace 4. La surface à dégivrer 3 peut notamment correspondre à une face de l'élément dégivrant 1 exposée directement à l'extérieur de l'aéronef comme un bord d'attaque.

De plus, l'élément dégivrant 1 comporte au moins un actionneur d'excitation 5 fixé sur la peau 2. Comme représenté de la figure 1 à la figure 7, l'actionneur d'excitation 5 peut être fixé sur une surface arrière 6 opposée à la surface à dégivrer 3. De préférence, la surface arrière 6 correspond à une face de l'élément dégivrant 1 qui est protégée de la formation de givre.

L'actionneur d'excitation 5 peut correspondre à un actionneur de type électromécanique. Il est configuré pour exciter la peau 2 selon au moins un mode de vibration prédéterminé. De préférence, l'action « d'exciter » la peau 2 consiste à appliquer des sollicitations mécaniques entretenues à ladite peau 2 afin de la faire vibrer. Toutefois, il peut également s'agir de choquer ou de faire subir des impulsions de forces à la peau 2. L'actionneur d'excitation 5 peut donc être configuré pour exciter la peau 2 par vibrations, par chocs ou par impulsions de force. En outre, un mode de vibration de la peau 2 correspond à une forme caractéristique des déformations subies par la peau 2 lorsqu'elle est excitée par une excitation donnée. Des modes de vibration particuliers de la peau 2 sont représentés sur la figure 2, et de la figure 10 à la figure 14. Ils sont formés par des ventres 7 (représentés par des zones foncées) et par des noeuds 8 (représentés par des zones claires). Les ventres 7 correspondent à des zones de la peau 2 avec déformations et les noeuds 8 à des zones sans déformations. Les déformations du ou des modes de vibration de la peau 2 permettent de briser la couche de glace 4. Elles permettent notamment de créer des fissures dans la couche de glace 4 menant au dégivrage de la surface à dégivrer 3 de l'élément dégivrant 1. L'actionneur d'excitation 5 peut correspondre à un actionneur électromécanique usuel de technologies variées permettant de commander l'excitation de la peau 2. De préférence, l'actionneur d'excitation 5 correspond à un actionneur de type piézoélectrique, par exemple des actionneurs composites ou à céramiques multicouches ou encore des transducteurs précontraints. Toutefois il peut également s'agir d'un actionneur de type électromagnétique, par exemple un actionneur à bobine acoustique.

De façon non limitative, l'épaisseur caractéristique E de la peau 2 est comprise entre 0,5 mm et 5 mm. Par ailleurs, à titre d'exemple non limitatif, la peau 2 peut être réalisée en matériau métallique, par exemple en aluminium, ou en matériau composite. Ainsi, on obtient une peau 2 dont la souplesse permet à l'actionneur d'excitation 5, via une faible force de sollicitation et une faible consommation électrique, d'induire des déformations à ladite peau 2 suffisantes au dégivrage de la surface à dégivrer 3.

En outre, la peau 2 présente, localement, des variations d'épaisseur 9 qui sont localisées en fonction du ou des modes de vibration prédéterminés. Les variations d'épaisseur 9 sont notamment localisées de façon spécifique afin d'optimiser les déformations du ou des modes de vibration prédéterminés, tel que décrit ci-dessous. Cette localisation spécifique des variations d'épaisseur 9 a pour effet de maximiser l'efficacité des déformations de la peau 2 pour briser et/ou créer des fissures dans la couche de glace 4.

De plus, le ou les modes de vibration prédéterminés correspondent à des modes de vibration de la peau 2 choisis lors d'études préalables. En effet, les modes de vibration de la peau 2 dépendent de sa géométrie, des matériaux dans lesquels elle est réalisée et des conditions à ses limites, à savoir notamment comment elle est fixée à ses extrémités. En fonction de ces critères, la peau 2 présente des modes de vibration spécifiques qu'il convient d'identifier afin de déterminer ceux qui présentent un intérêt. L'identification des modes de vibration de la peau 2 peut être réalisée par simulation numérique, par exemple par des méthodes à éléments finis. Toutefois, elle peut également être réalisée de manière empirique.

Le ou les modes de vibration prédéterminés sont choisis parmi les modes de vibration identifiés lors des études préalables. De préférence, ils correspondent à des modes de vibration dont les déformations permettent de couvrir la plus grande surface de la peau 3 possible. Le choix de plusieurs modes de vibrations permet notamment de cibler des déformations couvrant la totalité, ou presque, de la surface à dégivrer 3.

Les variations d'épaisseur 9 sont localisées sur la peau 2 en fonction du ou des modes de vibration prédéterminés de manière à uniformiser les déformations de la peau 2 au niveau du ou des ventres 7. « Uniformiser les déformations » signifie améliorer la distribution desdites déformations sur l'ensemble de la peau 2.

En effet, pour une peau usuelle présentant une épaisseur constante, l'énergie de déformation élastique générée par une déformation de ladite peau n'est pas uniforme. En particulier, lorsqu'une telle peau est excitée, elle présente une énergie de déformation élastique maximale au niveau des ventres et nulle au niveau des noeuds. Cela génère un taux de restitution d'énergie élastique fortement variable , ce qui pénalise la fracturation adhésive de la glace.

Les variation d'épaisseurs 9 permettent d'obtenir, notamment, des modes de résonance en flexion uniformisant les déformations et donc les champs de répartition d'énergie de déformation élastique dans la glace facilitant le processus de délamination.

Cette uniformisation des déformations a plusieurs conséquences.

Premièrement, l'uniformisation des déformations de la peau 2 permet d'uniformiser l'énergie transmissible par ladite peau 2 à la couche de glace 4. En effet, en uniformisant les déformations, on uniformise les courbures qui sont des zones de fortes contraintes et donc de forte concentration d'énergie. Ainsi, l'uniformisation de la courbure permet d'uniformiser l'énergie élastique de déformation présente dans la glace au niveau des ventres 7. Par conséquent, les variations d'épaisseur 9, en uniformisant les courbures lors des déformations de la peau 2, permettent d'uniformiser l'énergie transmissible par ladite peau 2 à la couche de glace 4. Cette énergie est responsable du dégivrage de la surface 3 à dégivrer. Elle est particulièrement adaptée à l'élargissement de la surface de délamination de la couche de glace 4.

Deuxièmement, l'uniformisation de la courbure des déformations de la peau 2 permet d'augmenter et d'uniformiser le taux de restitution d'énergie sur la surface 3 à dégivrer. Or, le taux de restitution d'énergie caractérise la capacité à transmettre l'énergie et notamment la capacité à propager une fissure. Par conséquent, les variations d'épaisseur 9 permettent d'amplifier le transfert d'énergie de la peau 2 à la couche de glace 4, en particulier d'optimiser la propagation de fissures dans la couche de glace 4. Cela peut notamment permettre de propager plus efficacement des fissures lorsque la surface à dégivrer 3 présente plusieurs couches de glace 4 superposées les unes sur les autres.

Troisièmement, l'uniformisation des déformations de la peau 2 permet d'élargir les zones de courbure de ladite peau 2. L'élargissement des zones de courbure permet une meilleure répartition d'énergie sur la surface à dégivrer 3 et donc d'augmenter la surface de la peau 2 protégée efficacement contre le givre.

Par ailleurs, les modes de vibration de la peau 2 dépendent de la distribution de masse et des moments quadratiques (liés à la géométrie) de ladite peau 2. Il est possible d'influencer les modes de vibration en faisant varier ces paramètres, par exemple afin d'obtenir un mode de vibration spécifique à une excitation préférée. En effet, la densité d'énergie transmise par la peau à la glace dépend de la contrainte mécanique dans la peau lors de sa déformation. Cette densité d'énergie élastique est calculée à partir de l'équation suivante :

$$W_e = \frac{1}{2}\frac{\sigma^2}{E}$$

dans laquelle :

- $\sigma$ est la contrainte mécanique dans la peau ; et
- E est le module d'Young de la peau.

Pour un moment de flexion $M_f$ donné, cette contrainte mécanique est calculée à partir de l'équation suivante :

$$\sigma = \frac{M_f}{I}y$$

dans laquelle :

- $I$ est le moment quadratique de la peau ; et
- y est la position par rapport à la fibre neutre (la ligne passant par le centre de gravité des sections droites de la peau selon le plan de coupe considéré).

Le moment quadratique $I$ dépend fortement de l'épaisseur de la peau puisqu'il est calculé à partir de l'équation suivante :

$$I = \frac{b\,h^3}{12}$$

dans laquelle :

- b est la profondeur de la peau (selon le plan de coupe considéré) ; et
- h est l'épaisseur de la peau.

Par conséquent, en choisissant une épaisseur spécifique à des endroits particuliers, on est en mesure d'obtenir plus ou moins d'énergie élastique lors de la déformation de la peau.

Une autre méthode permettant de faire varier ces paramètres peut consister à optimiser la topologie de la peau 2 par exemple en créant des zones sans matière au sein de la peau 2. Une telle optimisation peut facilement être obtenue, notamment par impression 3D. Une autre méthode permettant de faire varier ces paramètres peut consister à réaliser la peau 2 en différents matériaux, par exemple en combinant matériau métallique et matériau composite, ou en utilisant des matériaux dits « sandwich ». Un matériau sandwich comprend deux couches externes minces et rigides entre lesquelles on assemble une âme interne légère et épaisse, telle qu'un nid d'abeille.

De préférence, les modes de vibration prédéterminés correspondent à des modes de résonance de la peau 2. Les modes de résonance sont des modes de vibration particulièrement adaptés au dégivrage puisqu'ils permettent d'obtenir des déformations de la peau 2 maximales. Cela permet d'optimiser l'efficacité du dégivrage de la surface à dégivrer 3.

De plus, comme représenté sur la figure 1 et la figure 2, les variations d'épaisseur 9 de la peau 2 sont localisées, de préférence, au niveau des ventres 7 du ou des modes de vibration prédéterminés.

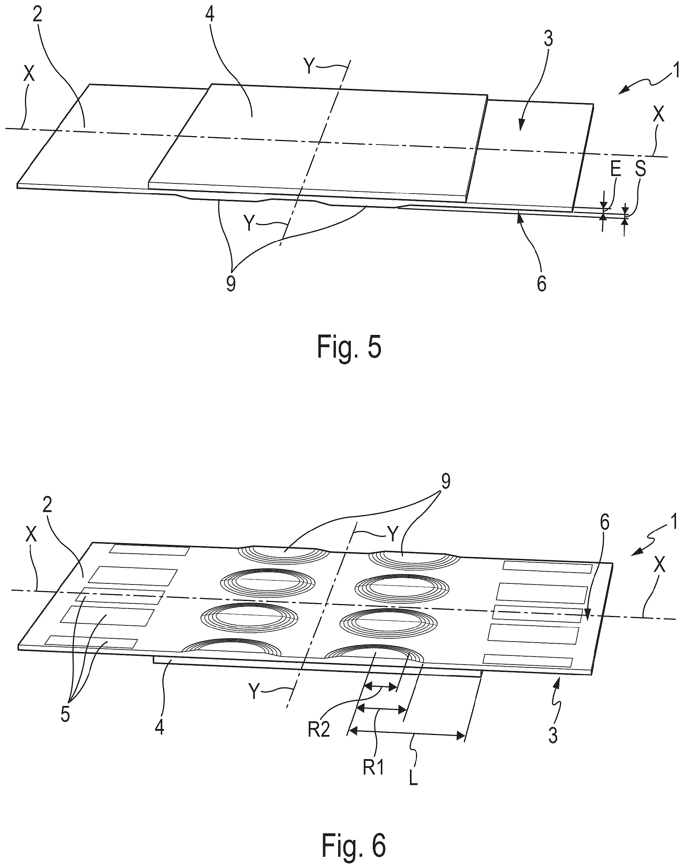

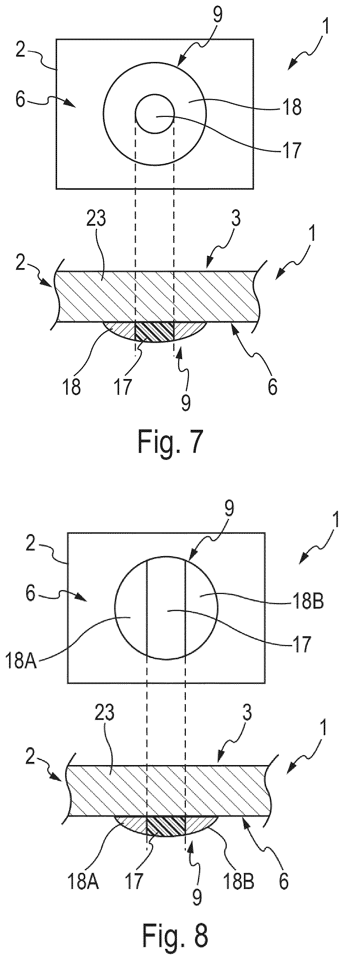

Dans un mode de réalisation particulier représenté sur la figure 1, la figure 2 et de la figure 5 à la figure 8, les variations d'épaisseur 9 de la peau 2 correspondent à des augmentations d'épaisseur de la peau 2. Ces augmentations d'épaisseur peuvent être réalisées directement dans la forme de la peau 2. Il peut s'agir notamment de bosses comme montré sur la figure 1 ou sur la figure 7 et la figure 8. Une bosse correspond à une saillie de matière présentant un contour linéaire et pouvant prendre des formes variées. Toutefois, une surépaisseur peut également prendre d'autres formes, par exemple une saille de matière étagée (avec un contour non linéaire) comme représentée sur la figure 5 et la figure 6.

Par ailleurs, dans un autre mode de réalisation représenté sur la figure 7 et la figure 8, les augmentations d'épaisseur de la peau 2 (dans ce cas des bosses) sont réalisées par des pièces rapportées. La peau 2 comporte une couche principale 23 d'épaisseur égale à l'épaisseur caractéristique E. Les pièces rapportées réalisant les augmentations d'épaisseurs sont fixées sur la couche principale 23 au niveau de la surface 6 opposée à la surface à dégivrer 3. Elles peuvent être fixées de façon usuelle, par exemple en étant collées. Les pièces rapportées sur la couche principale 23 de la peau 2 correspondent aux variations d'épaisseur 9. Elles permettent d'augmenter localement l'épaisseur de la peau 2 de façon simple, peu onéreuse et modulable.

Dans une réalisation particulière de l'un des modes de réalisation précédents, les augmentations d'épaisseur de la peau 2 présentent une forme de bosse. Comme représenté dans des exemples particuliers sur la figure 7 et la figure 8, ces bosses comprennent chacune une partie centrale 17 et une partie périphérique 18. La partie centrale 17 correspond à l'endroit où l'épaisseur de la peau 2 est maximale. La partie centrale 17 est entourée par une partie périphérique 18, 18A, 18B. La partie centrale 17 et la partie périphérique 18, 18A, 18B peuvent être agencées de manières variées. Par exemple, comme représenté sur la figure 7, la partie périphérique 18 peut entourer totalement la partie centrale 17 de manière circonférentielle. Dans un autre exemple, représenté sur la figure 8, la partie périphérique 18A, 18B peut entourer partiellement la partie centrale 17 sur les flancs. Dans ce cas, la partie périphérique 18A, 18B peut se présenter en deux éléments s'étendant longitudinalement de chaque côté de la partie centrale 17. De plus, la partie centrale 17 présente une rigidité supérieure à la rigidité de la partie périphérique 18, 18A, 18B. Par exemple, la partie centrale 17 peut être réalisée dans un matériau plus rigide que le matériau de la partie périphérique 18, 18A, 18B. Cette différence de rigidité permet d'optimiser d'avantage les déformations de la peau 2 lorsqu'elle est excitée par les actionneurs 5.

Dans un autre mode de réalisation, représenté sur la figure 3 et la figure 4, les variations d'épaisseur 9 correspondent à des diminutions d'épaisseur locales de la peau 2 par rapport à l'épaisseur caractéristique E. Les diminutions d'épaisseur comprennent notamment chacune un fond 19 correspondant à l'endroit où l'épaisseur de la peau 2 est minimale.

Dans une réalisation particulière de ce mode de réalisation, représenté sur la figure 3, les diminutions d'épaisseur correspondent à des cavités incurvées. Ces cavités présentent notamment une forme arrondie creusée dans l'épaisseur de la peau 2. De plus, la peau comporte, au droit des fonds 19 de ces cavités, une partie rigide 20. La partie rigide 20 présente une rigidité supérieure à la rigidité du reste de la peau 2. Cette différence de rigidité permet d'optimiser d'avantage les déformations de la peau 2 lorsqu'elle est excitée par les actionneurs 5.

Dans une autre réalisation particulière de ce mode de réalisation, représenté sur la figure 4, l'élément 1 comporte une membrane 21. La membrane 21 est agencée sur la peau 2 de manière à épouser la forme des diminutions d'épaisseurs (dans ce cas des cavités). De plus, la membrane 21 comporte, au niveau de chaque fond 19, une extrémité concave 22. Ces extrémités concaves 22 présentent une rigidité supérieure à la rigidité du reste de la membrane 21. Cette différence de rigidité permet d'optimiser d'avantage les déformations de la peau 2 lorsqu'elle est excitée par les actionneurs 5. Par exemple, la membrane 21 est agencée sur la peau 2 par collage.

En outre, comme représenté dans des modes de réalisations particuliers sur la figure 1 et de la figure 3 à la figure 5, les variations d'épaisseurs 9 de la peau 2 présentent, de façon non limitative, une taille caractéristique comprise entre 30% et 80% de l'épaisseur caractéristique E de la peau 2. En particulier, les augmentations d'épaisseur présentent une épaisseur maximale S comprise entre 30% et 80% de l'épaisseur caractéristique de la peau 2. Les augmentations d'épaisseur présentent une profondeur maximale P comprise entre 30% et 80% de l'épaisseur caractéristique de la peau 2. De préférence, l'épaisseur maximale S ou la profondeur maximale P sont égales à 50% de l'épaisseur caractéristique E de la peau 2.

Trois exemples de réalisations particulières sont représentés de la figure 1 à la figure 11.

Un premier exemple de réalisation permettant de bien comprendre le principe de l'invention en une dimension est représenté de la figure 1 à la figure 4. Dans ces exemples, l'élément dégivrant 1 comporte une peau 2 présentant une forme de lame rectangulaire dont la grande longueur définit une direction longitudinale de la peau 2. La peau 2 est fixée à ses extrémités longitudinales par des liaisons de type encastrement. L'élément dégivrant 1 comporte également deux actionneurs d'excitation 5 agencés à chaque extrémité longitudinale de la peau 2.

Les actionneurs d'excitation 5 sont configurés pour faire vibrer la peau 2 selon un mode de vibration prédéterminé représenté sur la figure 2. Ce mode de vibration prédéterminé a été préalablement choisi comme détaillé précédemment et correspond à un mode de flexion usuel de la peau 2 selon une dimension, à savoir la direction longitudinale de la lame formant la peau 2. Le mode de flexion comprend trois ventres 7 et cinq noeuds 8. Les deux noeuds 8 aux extrémités longitudinales de la peau 2 correspondent aux encastrements de ladite peau 2.

Connaissant la forme du mode de flexion choisie et donc la localisation des ventres 7, des variations d'épaisseur 9 ont été prévues sur la surface arrière 6 de la peau 2 lors de la conception de cette dernière. Dans l'exemple de la figure 1 et de la figure 2, les variations d'épaisseur 9 correspondent à des bosses. Sur ces figures, la peau 2 comporte trois bosses au niveau des zones où les trois ventres 7 se forment lorsque la peau 2 est excitée par les actionneurs d'excitation 5. Grâce à ces bosses, on obtient une peau 2 dont les déformations sont uniformisées comme détaillé précédemment. La localisation des bosses au niveau des ventres 7 permet, en particulier, de répartir le taux de restitution d'énergie sur des zones plus larges autour des zones de forte courbure (à savoir les sommets des ventres 7) et donc d'étendre la surface effective dégivrée.

Dans l'exemple de la figure 3 et de la figure 4, les variations d'épaisseur 9 correspondent à des cavités. Cette variante de réalisation permet d'obtenir les mêmes effets que des bosses concernant les déformations de la peau 2. Elle permet donc d'obtenir la même efficacité pour dégivrer la surface à dégivrer 3 de la peau 2.

Un deuxième exemple de réalisation permettant de bien comprendre le principe de l'invention en deux dimensions est représenté sur la figure 5 et sur la figure 6. Dans cet exemple, l'élément dégivrant 1 comporte une peau 2 en forme de plaque présentant une direction longitudinale représentée par un axe X-X et une direction transversale représentée par un axe Y-Y. L'élément dégivrant 1 comporte également une pluralité d'actionneurs d'excitation 5 agencés symétriquement au niveau des extrémités longitudinales de la peau 2.

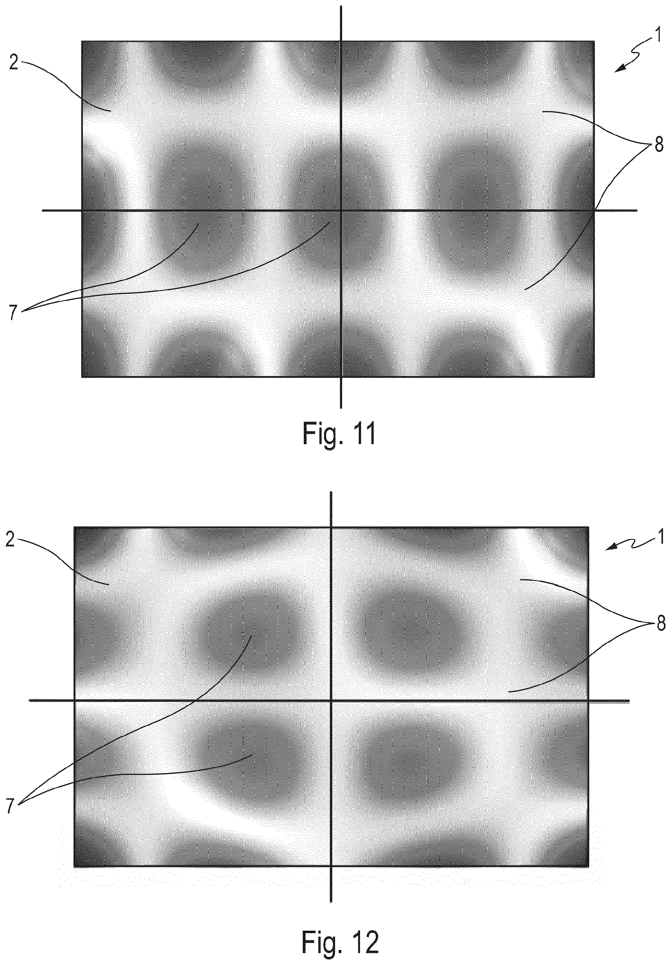

Les actionneurs d'excitation 5 sont configurés pour faire vibrer la peau 2 selon des modes de vibration prédéterminés (non représentés). À titre d'exemples, une peau 2 en forme de plaque vibrant selon deux modes de vibration possibles est représentée sur la figure 11 et la figure 12. Ces exemples ne sont pas limitatifs et les modes de vibrations prédéterminés peuvent être plus nombreux et avoir des formes très variées en fonction de la configuration de l'élément dégivrant 1 (géométrie de la plaque formant la peau 2, matériau, conditions aux limites). L'agencement et la configuration des actionneurs d'excitation 5 permettent notamment d'obtenir des modes de vibration variés. En effet, en faisant vibrer la peau 2 avec une même consigne de commande pour tous les actionneurs d'excitation 5, on peut obtenir un certain nombre de modes de vibration. Toutefois, on peut également obtenir des modes de vibration variés en activant successivement une partie des actionneurs d'excitation 5 puis une autre partie des actionneurs d'excitation 5. Une autre méthode permettant d'obtenir des modes de vibration variés peut être de commander les actionneurs d'excitation 5 avec des consignes différentes les uns des autres, par exemple avec des polarités différentes.

La peau 2 comporte une pluralité de variations d'épaisseur 9 sur sa surface arrière 6. Ces variations d'épaisseur 9 peuvent correspondre à des bosses. Chaque bosse présente une forme sensiblement circulaire avec une base de rayon R1 sur la surface arrière 6 et un sommet tronqué plat de rayon R2. De plus, les bosses peuvent être alignées en deux colonnes perpendiculaires à l'axe longitudinal X-X et symétriques par rapport à l'axe transversal Y-Y. Chaque colonne est agencée de sorte que le centre de chaque bosse d'une colonne est à une distance L de son extrémité longitudinale de la peau 2 la plus proche. De préférence, les rayons des bosses varient entre 40% et 70% de la distance L. Par exemple, le rayon R1 est égal à 70% de la distance L et le rayon R2 est égal à 40% de la distance L.

Une configuration des bosses sur la peau 2 telle que décrite ci-dessus permet d'obtenir une uniformisation optimisée des déformations de ladite peau 2 lorsqu'elle est excitée par les actionneurs d'excitation 5. En effet, de telles bosses évitent une trop forte rigidification de la peau 2 tout en maximisant la surface de la peau 2 pour laquelle les déformations de ladite peau 2 sont distribuées rendant le dégivrage plus efficace.

Un troisième exemple de réalisation permettant d'illustrer une application préférée de l'invention est représenté sur la figure 9 et sur la figure 10. Dans cet exemple, l'élément dégivrant 1 correspond à un bord d'attaque d'une entrée d'air 10 d'une nacelle de moteur. Plus particulièrement, le bord d'attaque, représenté schématiquement en coupe sur la figure 9, comporte une peau 2 présentant une forme de lèvre annulaire. Cette lèvre recouvre le contour de l'entrée d'air 10 à une extrémité avant 11. L'élément dégivrant 1 comporte également une pluralité d'actionneurs d'excitation 5 agencés au niveau d'une extrémité arrière 12 de la peau 2. L'extrémité arrière 12 est fixée à l'extrémité avant 11 de l'entrée d'air 10.

Les actionneurs d'excitation 5 sont configurés pour faire vibrer la peau 2 selon des modes de vibration prédéterminés variés. Un mode de vibration prédéterminé préféré pour une telle peau 2 est montré sur la figure 10 qui représente une portion de ladite peau 2 en forme de lèvre.

En outre, des variations d'épaisseur 9 correspondant à des bosses sont réalisées sur la peau 2. Ces bosses sont localisées en fonction des modes de vibration prédéterminés comme décrit précédemment. Elles sont réalisées sur la surface arrière 6 de la peau 2 définissant un espace intérieur 13 qui est orienté vers l'intérieur de la structure de l'entrée d'air 10. La surface à dégivrer 3 de la peau 2 est donc lisse lorsque la peau 2 n'est pas excitée par les actionneurs d'excitation 5, favorisant les propriétés aérodynamiques de l'élément d'aéronef 1.

Par ailleurs, des variantes de réalisation, représentées de la figure 11 à la figure 14, permettent d'optimiser plus encore le dégivrage de la peau 2 de l'élément dégivrant 1.

Dans une première variante de réalisation, représentée sur la figure 11 et la figure 12, l'actionneur d'excitation 5 de l'élément dégivrant 1 est configuré pour exciter successivement la peau 2 selon deux modes de vibration prédéterminés complémentaires en termes de déformées et de contraintes. Sur la figure 11 et la figure 12, la peau 2 est en forme de plaque, toutefois le principe de modes de vibration complémentaires n'est pas limité à cette géométrie de peau et peut s'appliquer à une peau 2 de forme quelconque. L'actionneur d'excitation 5 est configuré pour faire vibrer la peau 2 successivement et de manière répétée (ou cyclique) selon un premier mode de vibration dit « symétrique » (figure 11) puis un second mode de vibration dit « antisymétrique » qui est complémentaire au premier mode de vibration (figure 12).

Comme détaillé précédemment, des variations d'épaisseur 9 (non représentées sur les figures 11 et 12) sont réalisées sur la peau 2 en fonction, à la fois des modes de vibration symétrique et antisymétrique.

En outre, ces deux modes de vibration sont complémentaires en termes de déformées en ce que les ventres 7 de l'un sont localisés à l'emplacement des noeuds 8 de l'autre, et réciproquement. Cette complémentarité entre les deux modes de vibration permet d'obtenir des déformations de la peau 2 réparties sur la totalité de la surface 3 à dégivrer. Toutefois, la complémentarité entre les modes de vibration prédéterminés peut également concerner les contraintes mécaniques de la peau 2 lorsqu'elle est excitée. Par exemple, deux modes de vibrations peuvent être complémentaires en termes de contraintes en ce que les zones où les contraintes de l'une sont les plus fortes correspondent aux zones où les contraintes de l'autre sont les plus faibles.

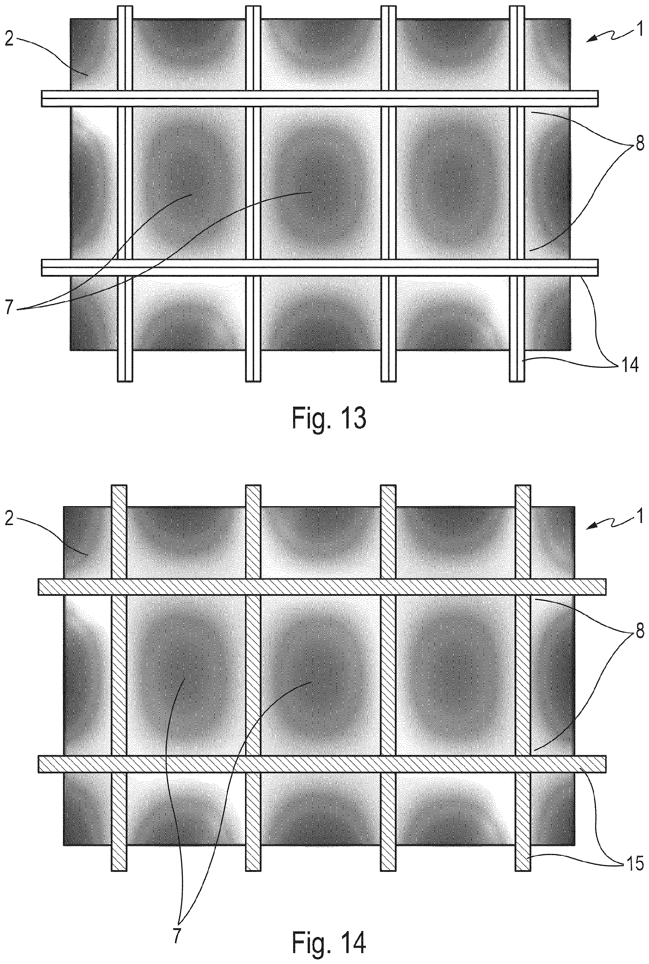

Dans une deuxième variante de réalisation représentée sur la figure 13, l'élément dégivrant 1 comporte des bandes thermiques 14 sur la surface à dégivrer 3 de la peau 2. Les bandes thermiques 14 sont fixées au niveau des noeuds 8 du mode de vibration prédéterminé considéré dans cet exemple de réalisation. Les bandes thermiques 14 sont notamment configurées pour générer une chaleur apte à diminuer l'adhésion ou à dégivrer la surface à dégivrer 3 à proximité des noeuds 8 sur lesquels elles sont agencées.

Les bandes thermiques 14 permettent d'aider au dégivrage de la peau 2 en faisant fondre la couche de glace 4, au moins partiellement, au niveau des noeuds 8 sur lesquels elles sont fixées. La couche de glace 4 ainsi fondue ou échauffée est alors plus facile à briser au niveau des noeuds 8 via les déformations de la peau 2 excitée par l'actionneur d'excitation 5. Les bandes thermiques 14 permettent ainsi de rendre le dégivrage de la peau 2 encore plus efficace.

Les bandes thermiques 14 peuvent correspondre à des dispositifs usuels de chauffage par résistance électrique. Elles peuvent être fixées sur la peau 2 de façon usuelle, par exemple en étant collées.

Dans une troisième variante de réalisation représentée sur la figure 14, l'élément dégivrant 1 comporte des bandes élastiques 15 sur la peau 2. Les bandes élastiques 15 sont fixées au niveau des noeuds 8 du mode de vibration prédéterminé considéré dans cet exemple. Les bandes élastiques 15 sont notamment aptes à induire une variation de rigidité locale de la peau 2. Par exemple, les bandes élastiques 15 peuvent correspondre à des bandes souples afin d'assouplir localement la peau 2. Assouplir localement la peau 2 signifie qu'au niveau des noeuds 8, la rigidité est moins importante que la rigidité moyenne de la peau 2 complète. Toutefois, dans d'autres cas, les bandes élastiques 15 peuvent plutôt correspondre à des bandes rigides aptes à rigidifier localement la peau 2. Rigidifier localement la peau 2 signifie qu'au niveau des noeuds 8, la rigidité est plus importante que la rigidité moyenne de la peau 2 complète.

Les bandes élastiques 15 permettent d'aider au dégivrage de la peau 2 en favorisant des contraintes de cisaillement au niveau des noeuds 8 sur lesquels elles sont fixées. En effet, lors de la déformation de la peau 2 par l'actionneur d'excitation 5, les noeuds 8 présentent des contraintes de cisaillement. Les bandes élastiques 15 permettent d'accentuer ces contraintes de cisaillement afin de favoriser des amorces de rupture dans la couche de glace 4 au niveau des noeuds 8. Les bandes élastiques 15 permettent ainsi de rendre le dégivrage de la peau 2 encore plus efficace.

Dans un quatrième mode de réalisation complémentaire représenté sur la figure 1, l'élément dégivrant 1 comporte sur la surface à dégivrer 3 de la peau 2 un revêtement glaciophobe 16. Le revêtement glaciophobe 16 correspond à une couche d'enduit appliquée sur la surface à dégivrer 3 apte à réduire l'adhérence de la couche de glace 4 sur ladite surface à dégivrer 3. Le revêtement glaciophobe 16 permet ainsi de rendre le dégivrage de la peau 2 encore plus efficace.

Par ailleurs, l'élément dégivrant 1 peut être une pièce de l'aéronef AC, tel que décrit précédemment. Comme représenté sur la figure 15, l'élément dégivrant 1 de l'aéronef AC correspond à un bord d'attaque d'une entrée d'air d'une nacelle de moteur dudit aéronef AC. Toutefois, l'aéronef AC peut également comporter des éléments dégivrant 1 correspondant à des éléments variés. Par exemple, il peut s'agir de bords d'attaque d'ailes ou des gouvernes.

L'élément dégivrant 1 comprenant la peau 2 apte à être excitée par l'actionneur d'excitation 5 tel que décrit ci-dessus, présente de nombreux avantages. En particulier,

- il permet d'obtenir une surface à dégivrer 3 qui peut être dégivrée par excitation mécanique de la peau 2 ;
- il permet d'améliorer le dégivrage de la surface à dégivrer 3 en uniformisant les déformations de la peau 2 et en amplifiant l'impact de l'actionneur sur la couche de glace 4 ;
- il permet d'augmenter l'efficacité du dégivrage en élargissant les zones de déformation efficaces de la peau 2 ;
- il permet d'obtenir un dégivrage d'une surface grâce à des sollicitations mécaniques et une consommation électrique faibles ;
- il permet de protéger des parties d'un aéronef contre la formation de givre ou de glace en fournissant une surface dégivrante.

**Revendications**

1. Élément dégivrant comportant une peau (2) pourvue d'une surface à dégivrer (3),
**caractérisé en ce qu'**il comprend au moins un actionneur d'excitation (5) fixé sur la peau (2), l'actionneur d'excitation (5) étant configuré pour exciter la peau (2) selon au moins un mode de vibration prédéterminé générant une déformation de la peau (2), la déformation de la peau (2) comportant au moins un ventre (7) et un noeud (8), et **en ce que** la peau (2) présente une épaisseur caractéristique (E) généralement constante avec, localement, au moins une variation d'épaisseur (9) qui est localisée en fonction du ou des modes de vibration prédéterminés.

2. Élément dégivrant selon la revendication 1, **caractérisé en ce que** le ou les modes de vibration prédéterminés correspondent à des modes de résonance de la peau (2).

3. Élément dégivrant selon l'une des revendications 1 et 2, **caractérisé en ce que** la ou les variations d'épaisseur (9) de la peau (2) sont localisées au niveau du ou des ventres du ou des modes de vibration prédéterminés.

4. Élément dégivrant selon l'une des revendications 1 à 3, **caractérisé en ce que** la ou les variations d'épaisseur (9) de la peau (2) correspondent à des augmentations d'épaisseur locales de ladite peau (2) par rapport à l'épaisseur caractéristique (E).

5. Élément dégivrant selon l'une des revendications 1 à 4, **caractérisé en ce que** la peau (2) comporte :

   - une couche principale (23) d'épaisseur égale à l'épaisseur caractéristique (E) ; et
   - une ou plusieurs pièces rapportées fixées sur la couche principale (23),

   la ou les pièces rapportées correspondant à la ou aux variations d'épaisseur 9 de la peau (2).

6. Élément dégivrant selon l'une des revendications 4 et 5, **caractérisé en ce que** la ou les augmentations d'épaisseur de la peau (2) présentent une forme de bosse comprenant chacune une partie centrale (17), où l'épaisseur de la peau (2) est maximale, et une partie périphérique (18, 18A, 18B) entourant la partie centrale (17), la partie centrale (17) présentant une rigidité supérieure à une rigidité de la partie périphérique (18, 18A, 18B).

7. Élément dégivrant selon l'une des revendications 1 à 3, **caractérisé en ce que** la ou les variations d'épaisseur (9) correspondent à des diminutions d'épaisseur locales de ladite peau (2) par rapport à l'épaisseur caractéristique (E), lesdites diminutions d'épaisseur comprenant chacune un fond (19) où l'épaisseur de la peau (2) est minimale.

8. Élément dégivrant selon l'une des revendications 1 à 7, **caractérisé en ce que** l'actionneur d'excitation (5) est configuré pour exciter successivement la peau (2) selon au moins deux modes de vibration prédéterminés, lesdits modes de vibration prédéterminés étant complémentaires en termes de déformées et de contraintes.

9. Élément dégivrant selon l'une des revendications 1 à 8, **caractérisé en ce qu'**il comporte au moins une bande thermique (14) fixée sur la peau (2) au niveau d'au moins un noeud (8) du ou des modes de vibration prédéterminés, ladite bande thermique (14) étant configurée pour générer une chaleur apte à dégivrer la surface à dégivrer (3) de la peau (2) au moins au niveau du ou des noeuds (8) sur lesquels elle est fixée.

10. Élément dégivrant selon l'une des revendications 1 à 9, **caractérisé en ce que** l'actionneur d'excitation (5) correspond à un actionneur électromagnétique ou à un actionneur piézoélectrique.

11. Élément dégivrant selon l'une des revendications 1 à 10, **caractérisé en ce que** l'actionneur d'excitation (5) est configuré pour exciter la peau (2) par vibrations, par chocs ou par impulsions de force.

Fig. 1

Fig. 2

Fig. 3

Fig. 4

# Fig. 5

# Fig. 6

Fig. 7

Fig. 8

Fig. 9

Fig. 10

Fig. 11

Fig. 12

Fig. 13

Fig. 14

Fig. 15

Europäisches Patentamt
European Patent Office
Office européen des brevets

**RAPPORT DE RECHERCHE EUROPEENNE**

Numéro de la demande

**EP 23 17 2638**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2013/277501 A1 (DELRIEU JULIEN [FR]) 24 octobre 2013 (2013-10-24) * alinéas [0025] - [0031]; figures 5A, 5B * ----- | 1-8,10, 11 | INV. B64D15/16 |
| X | US 2016/325842 A1 (BOISSY LOIC [FR]) 10 novembre 2016 (2016-11-10) * alinéas [0033] - [0069]; figures 1-9 * ----- | 1-11 | |
| X | WO 2021/037976 A1 (AIRBUS OPERATIONS GMBH [DE]) 4 mars 2021 (2021-03-04) * page 13, lignes 7-15; figure 3 * ----- | 1-4,7,8, 10,11 | |
| A | CN 112 644 714 A (UNIV HARBIN ENG) 13 avril 2021 (2021-04-13) * abrégé * ----- | 1-11 | |

**DOMAINES TECHNIQUES RECHERCHES (IPC)**

**B64D**

Le présent rapport a été établi pour toutes les revendications

| Lieu de la recherche | Date d'achèvement de la recherche | Examinateur |
|---|---|---|
| **Munich** | **4 septembre 2023** | **Lambert, Brice** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**EP 4 279 388 A1**

## ANNEXE AU RAPPORT DE RECHERCHE EUROPEENNE
## RELATIF A LA DEMANDE DE BREVET EUROPEEN NO.

EP 23 17 2638

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-09-2023

| Document brevet cité au rapport de recherche | Date de publication | Membre(s) de la famille de brevet(s) | Date de publication |
|---|---|---|---|
| US 2013277501 A1 | 24-10-2013 | EP 2850001 A2 | 25-03-2015 |
| | | ES 2865078 T3 | 14-10-2021 |
| | | US 2013277501 A1 | 24-10-2013 |
| | | WO 2013156880 A2 | 24-10-2013 |
| US 2016325842 A1 | 10-11-2016 | BR 112016016734 A2 | 08-08-2017 |
| | | CA 2932742 A1 | 30-07-2015 |
| | | EP 3097017 A1 | 30-11-2016 |
| | | US 2016325842 A1 | 10-11-2016 |
| | | WO 2015110974 A1 | 30-07-2015 |
| WO 2021037976 A1 | 04-03-2021 | EP 4021808 A1 | 06-07-2022 |
| | | US 2022219825 A1 | 14-07-2022 |
| | | WO 2021037976 A1 | 04-03-2021 |
| CN 112644714 A | 13-04-2021 | AUCUN | |

EPO FORM P0460

Pour tout renseignement concernant cette annexe : voir Journal Officiel de l'Office européen des brevets, No.12/82